# EUROPEAN PATENT SPECIFICATION

(11) **EP 3 926 503 B1**
(45) Date of publication and mention of the grant of the patent: **14.10.2026**
(21) Application number: 21176516.9
(22) Date of filing: 28.05.2021
(51) Int. Cl.: H04L 9/40, G06Q 10/105, G09B 19/00, G06F 21/57, G06N 20/00, G06F 21/56

(54) **DYNAMICALLY PROVIDING CYBERSECURITY TRAINING BASED ON USER-SPECIFIC THREAT INFORMATION**
DYNAMISCHE BEREITSTELLUNG VON CYBERSICHERHEITSTRAINING AUF BASIS VON BENUTZERSPEZIFISCHEN BEDROHUNGSINFORMATIONEN
FOURNITURE DYNAMIQUE D'UNE FORMATION À LA CYBERSÉCURITÉ BASÉE SUR DES INFORMATIONS SUR LES MENACES SPÉCIFIQUES À L'UTILISATEUR

(30) Priority: 16.06.2020 US 202063039631 P; 11.12.2020 US 202017119564
(43) Date of publication of application: 22.12.2021
(73) Proprietor: Proofpoint, Inc., Sunnyvale, CA 94085 (US)
(72) Inventor: Wuslich, Mark, Sunnyvale, CA 94085 (US); Himler, Alan James, Sunnyvale, CA 94085 (US); Mazzotta, Ali, Sunnyvale, CA 94085 (US); Wescoe, Kurt Frederick, Sunnyvale, CA 94085 (US); Miles, Richard Charles, Sunnyvale, CA 94085 (US)
(74) Representative: Käck, Stefan

(56) References cited:
- US-A1- 2013 203 023
- US-A1- 2014 199 663
- US-A1- 2014 199 664
- US-A1- 2018 041 537
- US-A1- 2019 173 919

## Description

### TECHNICAL FIELD

Aspects of the disclosure relate to digital data processing systems, data processing methods, machine learning systems, communication systems and networks, and cybersecurity. In particular, one or more aspects of the disclosure relate to dynamically providing cybersecurity training based on user-specific threat information.

### BACKGROUND

Increasingly, users of computing devices and electronic communications services face various cybersecurity threats, including malicious phishing attempts and spam messages. While some tools have been developed to combat these threats, it remains difficult to provide enterprise users and other users with access to electronic information (which may, e.g., be remotely hosted and/or linked to in electronic communications sent to such users) in a manner that efficiently and effectively ensures the safety of each user, each user's personal information, and each user's computing device. One effective protection measure is training users to recognize and avoid cybersecurity threats that they encounter on a regular basis. But this too can be problematic, as it may be difficult to determine which users are encountering which threats, which users are most susceptible to threats, and/or which users are more likely to be targeted by malicious actors. Moreover, these issues are further complicated when attempting to balance and optimize the consumption of the computing resources required to provide such protective features in an automated fashion while being constrained by the limitations imposed by finite processing power and limited network bandwidth.

U.S. Patent Application Publication No. US 2019/0173919 A1 discloses methods and systems in which a system provides a user interface to confirm whether to review or take an action associated with an untrusted email. A driver on a device monitors the startup of any processes. Responsive to monitoring, the driver detects an application process that was created that indicates that an application was launched, and notifies a user console about the creation of the application process. The user console determines if the application process is of significance, and if so, it injects a monitor library into the process. Once injected into the process, the monitor library detects if the application process receives an action of a user to access a domain that is not identified as trusted. The monitor library notifies the user console of the user's URL-access request.

U.S. Patent Application Publication No. US 2013/0203023 A1 discloses a context-aware training system that senses a user action that may expose the user's computer to a cybersecurity threat. The system selects training action from a collection of available training actions and causes the training action to be selected to the user.

In U.S. Patent Application Publication No. US 2014/0199664 A1, a training system that senses a user action is described. The system may expose the user to a threat, such as a cybersecurity threat. The user action may be in response to a mock attack delivered via a messaging service, a wireless communication service, a fake malware application or another device, service, system or mechanism. The system selects a training action from a collection of available training actions and causes the training action to be delivered to the user.

Further, U.S. Patent Application Publication No. US 2014/0199663 A1 also discloses a context-aware training system that senses a user action that may expose the user to a threat, such as a cybersecurity threat. The system selects a training action from a collection of available training actions and causes the training action to be delivered to the user or a group of users. The system includes an administrator interface that enables an administrator to select, customize and/or assign constraints to the training action that will be delivered to the user(s).

### SUMMARY

Aspects of the disclosure provide technical solutions that overcome one or more of the technical problems described above and/or other technical challenges. For instance, one or more aspects of the disclosure relate to dynamically providing cybersecurity training based on user-specific threat information.

The invention is defined in the independent claims. Particular embodiments are set out in the dependent claims.

In accordance with one or more embodiments, a computing platform having at least one processor, a communication interface, and memory may receive, via the communication interface, from a targeted attack protection (TAP) server, user-specific threat information indicating at least one threat that has been encountered by at least one user. Subsequently, the computing platform may identify one or more users to receive cybersecurity training in a first cybersecurity training topic based on the user-specific threat information indicating the at least one threat that has been encountered by the at least one user. Then, the computing platform may load one or more cybersecurity training modules based on identifying the one or more users to receive the cybersecurity training in the first cybersecurity training topic. Next, the computing platform may provide the one or more cybersecurity training modules to one or more user computing devices.

In some embodiments, receiving the user-specific threat information indicating the at least one threat that has been encountered by the at least one user may include receiving information stored by the TAP server based on the TAP server monitoring email traffic and identifying cybersecurity threats associated with the email traffic.

In some embodiments, receiving the user-specific threat information indicating the at least one threat that has been encountered by the at least one user may include receiving information indicating that a first enterprise user has encountered a first message-based threat and a second enterprise user has encountered a second message-based threat.

In some embodiments, receiving the user-specific threat information indicating the at least one threat that has been encountered by the at least one user may include receiving information indicating one or more user identifiers and one or more specific threats corresponding to the one or more user identifiers.

In some embodiments, receiving the user-specific threat information indicating the at least one threat that has been encountered by the at least one user may include receiving threat family information associated with the at least one user and threat degree information associated with the at least one user.

In some embodiments, identifying the one or more users to receive the cybersecurity training in the first cybersecurity training topic based on the user-specific threat information indicating the at least one threat that has been encountered by the at least one user may include identifying a first user of the one or more users to receive the cybersecurity training in the first cybersecurity training topic based on the user-specific threat information indicating that the first user has encountered a specific threat corresponding to the first cybersecurity training topic.

In some embodiments, identifying the one or more users to receive the cybersecurity training in the first cybersecurity training topic based on the user-specific threat information indicating the at least one threat that has been encountered by the at least one user may include identifying a second user of the one or more users to receive the cybersecurity training in the first cybersecurity training topic based on the user-specific threat information indicating that the second user is a top clicker.

In some embodiments, identifying the one or more users to receive the cybersecurity training in the first cybersecurity training topic based on the user-specific threat information indicating the at least one threat that has been encountered by the at least one user may include identifying a third user of the one or more users to receive the cybersecurity training in the first cybersecurity training topic based on the user-specific threat information indicating that the third user is a very attacked person (VAP).

In some embodiments, providing the one or more cybersecurity training modules to the one or more user computing devices may include generating one or more training user interfaces based on information associated with the one or more cybersecurity training modules, and sending, via the communication interface, to a user computing device, the one or more training user interfaces generated based on the information associated with the one or more cybersecurity training modules. In addition, sending the one or more training user interfaces generated based on the information associated with the one or more cybersecurity training modules may cause the user computing device to display the one or more training user interfaces generated based on the information associated with the one or more cybersecurity training modules.

In some embodiments, providing the one or more cybersecurity training modules to the one or more user computing devices may include automatically enrolling a specific user in a specific training module.

In some embodiments, prior to providing the one or more cybersecurity training modules to the one or more user computing devices, the computing platform may dynamically adapt at least one training module of the one or more cybersecurity training modules based on the user-specific threat information.

In some embodiments, the computing platform may identify one or more additional users to receive cybersecurity training in a second cybersecurity training topic based on the user-specific threat information, where the second cybersecurity training topic is different from the first cybersecurity training topic. Subsequently, the computing platform may load one or more additional cybersecurity training modules based on identifying the one or more additional users to receive the cybersecurity training in the second cybersecurity training topic. Then, the computing platform may provide the one or more additional cybersecurity training modules to one or more additional user computing devices.

In some embodiments, prior to providing the one or more additional cybersecurity training modules to the one or more additional user computing devices, the computing platform may dynamically adapt at least one training module of the one or more additional cybersecurity training modules based on the user-specific threat information.

### BRIEF DESCRIPTION OF THE DRAWINGS

The present disclosure is illustrated by way of example and not limited in the accompanying figures in which like reference numerals indicate similar elements and in which:
FIGS. 1A and 1B depict an illustrative operating environment for dynamically providing cybersecurity training based on user-specific threat information in accordance with one or more example embodiments;
FIGS. 2A-2D depict an illustrative event sequence for dynamically providing cybersecurity training based on user-specific threat information in accordance with one or more example embodiments;
FIGS. 3 and 4 depict illustrative user interfaces for dynamically providing cybersecurity training based on user-specific threat information in accordance with one or more example embodiments; and
FIG. 5 depicts an illustrative method for dynamically providing cybersecurity training based on user-specific threat information in accordance with one or more example embodiments.

### DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized, and structural and functional modifications may be made, without departing from the scope of the present disclosure. Various connections between elements are discussed in the following description. It is noted that these connections are general and, unless specified otherwise, may be direct or indirect, wired or wireless, and that the specification is not intended to be limiting in this respect.

Some aspects of the disclosure relate to dynamically providing cybersecurity training based on user-specific threat information. For example, in some arrangements, systems and methods are provided for identifying users for cybersecurity training based on 'top clicker' information and/or 'very attacked person' (VAP) information received from a targeted attack protection (TAP) platform (which may, e.g., monitor email traffic associated with various users). In some instances, in addition to identifying users to be trained, the specific type(s) of training that a specific user should receive may be determined based on threat information received from the TAP platform. For instance, the TAP platform may provide information indicating that a particular user faces a relatively large amount of business email compromise (BEC) threats, and this information may be used to automatically enroll the user in one or more cybersecurity training modules that are tailored to BEC threats. These and other features are illustrated in greater detail below.

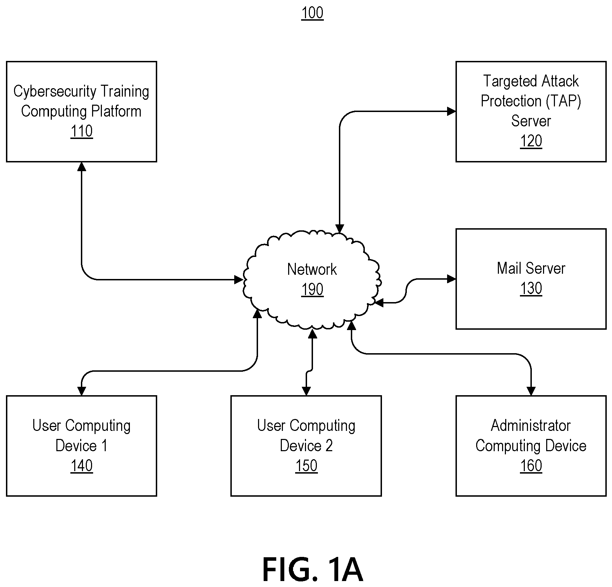

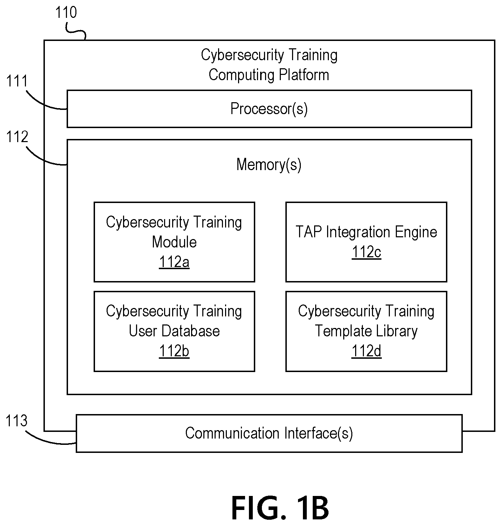

FIGS. 1A and 1B depict an illustrative operating environment for dynamically providing cybersecurity training based on user-specific threat information in accordance with one or more example embodiments. Referring to FIG. 1A, computing environment 100 may include various computer systems, computing devices, networks, and/or other operating infrastructure. For example, computing environment 100 may include a cybersecurity training computing platform 110, a targeted attack protection (TAP) server 120, a mail server 130, a first user computing device 140, a second user computing device 150, an administrator computing device 160, and a network 190.

Network 190 may include one or more wired networks and/or one or more wireless networks that interconnect cybersecurity training computing platform 110, targeted attack protection server 120, mail server 130, user computing device 140, user computing device 150, administrator computing device 160, and/or other computer systems and/or devices. In addition, each of cybersecurity training computing platform 110, targeted attack protection server 120, mail server 130, user computing device 140, user computing device 150, administrator computing device 160 may be special purpose computing devices configured to perform specific functions, as illustrated in greater detail below, and may include specific computing components such as processors, memories, communication interfaces, and/or the like.

Targeted attack protection server 120 may be configured to generate and/or store user profiles (which may, e.g., correspond to different users associated with different organizations), monitor message traffic (which may, e.g., include messages sent and/or received by users associated with the user profiles), identify threats included in the message traffic (which may, e.g., include identifying malicious links and/or attachments included in such message traffic), and store user-specific threat information (which may, e.g., indicate specific threats that were received and/or otherwise encountered by specific users in the monitored message traffic). Additionally or alternatively, targeted attack protection server 120 may be configured to maintain other information associated with the users for which message traffic is being monitored, such as information indicating a user's role and/or authority within their organization, information indicating whether a user is a very attacked person within their organization, and/or information indicating whether a user is a top clicker (e.g., someone who is relatively more likely to click on a link included in an email message than other users) within their organization.

Mail server 130 may be configured to send, receive, and/or otherwise process messages (e.g., inbound and outbound email messages). In some instances, mail server 130 may be associated with a particular organization (e.g., an enterprise organization), while in other instances, mail server 130 may be configured to process messages for users associated with different organizations.

User computing device 140 may be configured to be used by a first user (who may, e.g., be an enterprise user associated with an enterprise organization operating mail server 130). In some instances, user computing device 140 may be configured to present one or more user interfaces associated with a message application (e.g., an email client application) that may receive information from, send information to, and/or otherwise exchange information with mail server 130. Additionally or alternatively, user computing device 140 and/or one or more software applications executing on user computing device 140 may receive information from, send information to, and/or otherwise exchange information cybersecurity training computing platform 110 and targeted attack protection server 120.

User computing device 150 may be configured to be used by a second user (who may, e.g., be an enterprise user associated with an enterprise organization operating mail server 130 and who may be different from the first user of user computing device 140). In some instances, user computing device 150 may be configured to present one or more user interfaces associated with a message application (e.g., an email client application) that may receive information from, send information to, and/or otherwise exchange information with mail server 130. Additionally or alternatively, user computing device 150 and/or one or more software applications executing on user computing device 150 may receive information from, send information to, and/or otherwise exchange information cybersecurity training computing platform 110 and targeted attack protection server 120.

Administrator computing device 160 may be configured to be used by an administrative user (who may, e.g., be a network administrator of an enterprise organization operating mail server 130). Administrator computing device 160 may be configured to present one or more user interfaces associated with an administrative dashboard (e.g., a cybersecurity dashboard), receive and/or display one or more alerts, and/or otherwise facilitate monitoring and management of one or more systems and/or devices included in computing environment 100.

Referring to FIG. 1B, cybersecurity training computing platform 110 may include one or more processor(s) 111, one or more memory(s) 112, and one or more communication interface(s) 113. In some instances, cybersecurity training computing platform 110 may be made up of a plurality of different computing devices, which may be distributed within a single data center or a plurality of different data centers. In these instances, the one or more processor(s) 111, one or more memory(s) 112, and one or more communication interface(s) 113 included in cybersecurity training computing platform 110 may be part of and/or otherwise associated with the different computing devices that form cybersecurity training computing platform 110.

In one or more arrangements, processor(s) 111 may control operations of cybersecurity training computing platform 110. Memory(s) 112 may store instructions that, when executed by processor(s) 111, cause cybersecurity training computing platform 110 to perform one or more functions, as discussed below. Communication interface(s) 113 may include one or more wired and/or wireless network interfaces, and communication interface(s) 113 may connect cybersecurity training computing platform 110 to one or more networks (e.g., network 190) and/or enable cybersecurity training computing platform 110 to exchange information and/or otherwise communicate with one or more devices connected to such networks.

In one or more arrangements, memory(s) 112 may store and/or otherwise provide a plurality of modules (which may, e.g., include instructions that may be executed by processor(s) 111 to cause cybersecurity training computing platform 110 to perform various functions), databases (which may, e.g., store data used by cybersecurity training computing platform 110 in performing various functions), and/or other elements (which may, e.g., include processing engines, services, and/or other elements). For example, memory(s) 112 may store and/or otherwise provide a cybersecurity training module 112a, a cybersecurity training user database 112b, a TAP integration engine 112c, and a cybersecurity training template library 112d. In some instances, cybersecurity training module 112a may store instructions that cause cybersecurity training computing platform 110 to dynamically provide cybersecurity training based on user-specific threat information and/or execute one or more other functions described herein. Additionally, cybersecurity training user database 112b may store data that is used by cybersecurity training computing platform 110 in dynamically providing cybersecurity training based on user-specific threat information, such as user profile information. TAP integration engine 112c may store instructions and/or data that enable cybersecurity training computing platform 110 to exchange user-specific threat information and/or other information with targeted attack protection server 120 and/or other data servers and/or data sources. Cybersecurity training template library 112d may store one or more training templates that may be used by cybersecurity training computing platform 110 in dynamically providing cybersecurity training based on user-specific threat information, such as specific templates for training users in specific cybersecurity topics.

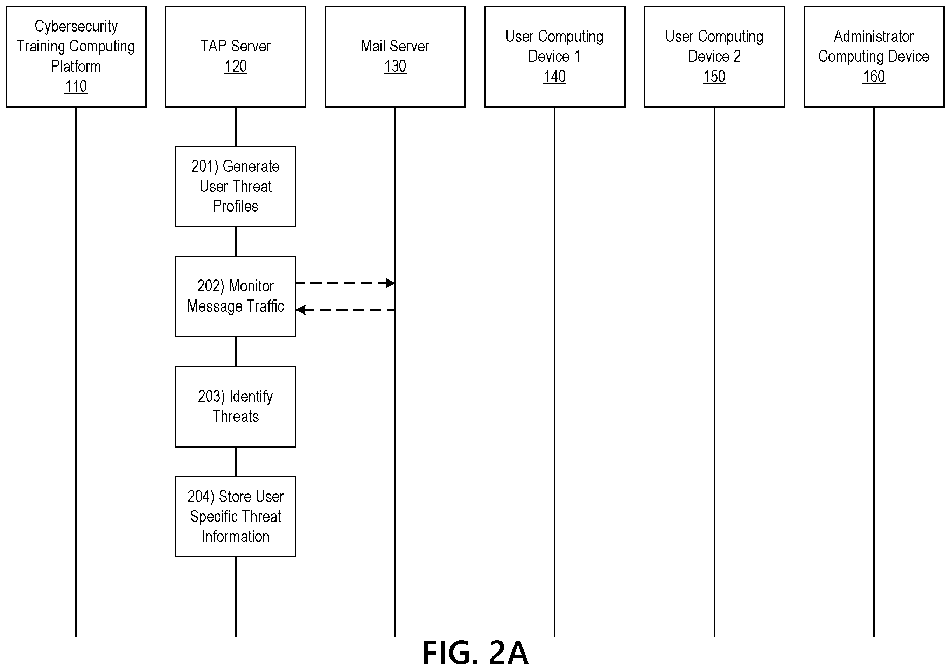

FIGS. 2A-2D depict an illustrative event sequence for dynamically providing cybersecurity training based on user-specific threat information in accordance with one or more example embodiments. Referring to FIG. 2A, at step 201, targeted attack protection server 120 may generate a plurality of user threat profiles. For example, an enterprise organization may have a plurality of users, and targeted attack protection server 120 may generate a user profile for each user of the plurality of users associated with the enterprise organization. Each user profile may, for instance, include the corresponding user's name, email address and/or other user identifier, one or more risk scores, threat profile information (which may, e.g., indicate what threats a user has been exposed to and/or otherwise at risk for) that is specific to the corresponding user, and/or other information. Each user profile also may, for instance, include one or more fields for storing user-specific threat information, which may include information identifying specific threats encountered by the user at specific dates and/or times, specific sources of such threats, risk categories and/or severity levels associated with such threats, and/or other threat information.

At step 202, targeted attack protection server 120 may monitor message traffic. For example, at step 202, targeted attack protection server 120 may exchange data with mail server 130 to scan email traffic and/or other message information being processed by mail server 130. Such email traffic and/or other message information may include message headers, message body content, and/or other information associated with messages being received by, sent via, and/or otherwise processed by mail server 130.

At step 203, targeted attack protection server 120 may identify one or more threats present in the message traffic. For example, at step 203, targeted attack protection server 120 may determine that one or more specific users have received one or more specific messages that contain one or more specific cybersecurity threats, such as phishing attempts, malware attachments, spam content, business email compromise (BEC) attempts, and/or other threats. Targeted attack protection server 120 may identify and/or otherwise determine the presence of such threats by scanning the message information monitored at step 202, evaluating the message information against one or more threat profiles, and/or applying one or more machine learning algorithms that are configured to identify cybersecurity threats.

At step 204, targeted attack protection server 120 may store user-specific threat information. For example, at step 204, based on identifying the one or more threats present in the message traffic, targeted attack protection server 120 may store user-specific threat information identifying that one or more specific users have encountered one or more specific threats (e.g., in messages that they have received and/or been sent). In some instances, targeted attack protection server 120 may store the user-specific threat information in each user's user profile. For instance, targeted attack protection server 120 may store user-specific threat information identifying specific threats encountered by the user at specific dates and/or times, specific sources of such threats (e.g., emails from specific senders and/or domains), risk categories and/or severity levels associated with such threats (e.g., phishing category, malware category, BEC category, low severity, medium severity, high severity, etc.), and/or other threat information.

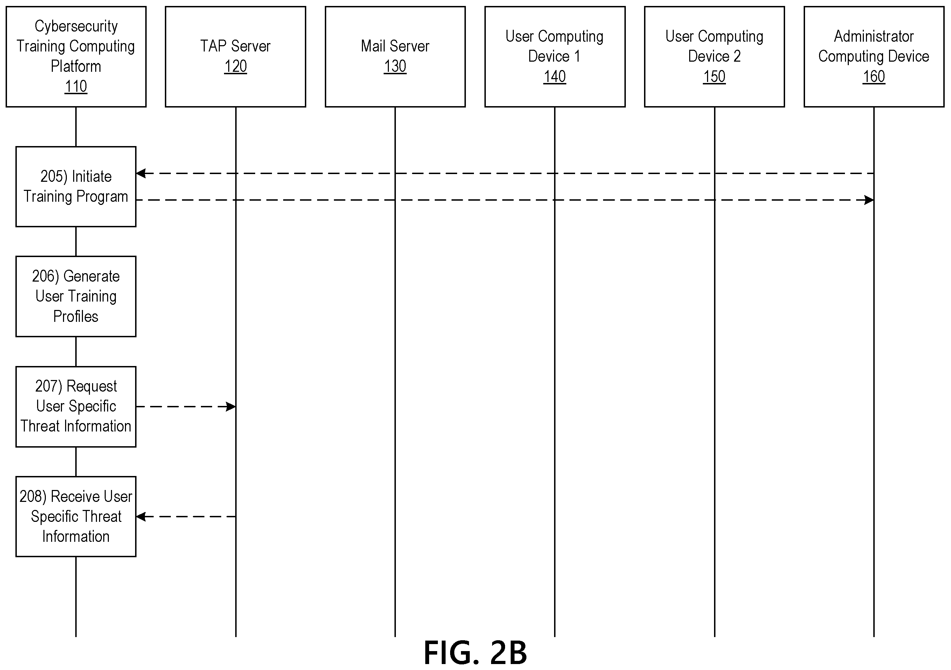

Referring to FIG. 2B, at step 205, cybersecurity training computing platform 110 may initiate a cybersecurity training program. For example, at step 205, cybersecurity training computing platform 110 may receive a request and/or configuration information from administrator computing device 160 directing cybersecurity training computing platform 110 to provide one or more users with cybersecurity training. As illustrated in greater detail below, cybersecurity training computing platform 110 may use the user-specific threat information maintained by targeted attack protection server 120 in dynamically customizing the cybersecurity training program for each user to be trained, based on the specific cybersecurity threats encountered by each user in their email message traffic.

At step 206, cybersecurity training computing platform 110 may generate one or more user training profiles. For example, at step 206, cybersecurity training computing platform 110 may generate one or more user training profiles based on the user threat profiles that were generated and/or are maintained by targeted attack protection server 120. In some instances, the user training profiles generated by cybersecurity training computing platform 110 may include and/or initially correspond to the user threat profiles maintained by targeted attack protection server 120, and cybersecurity training computing platform 110 may exchange information with targeted attack protection server 120 to obtain the user threat profiles from targeted attack protection server 120. Additionally or alternatively, cybersecurity training computing platform 110 may generate and/or add to the user training profiles based on user input (which may, e.g., be received from administrator computing device 160) and/or information from other sources, such as other training platforms, corporate directories, and/or other user databases.

At step 207, cybersecurity training computing platform 110 may request user-specific threat information (e.g., from targeted attack protection server 120). For example, at step 207, based on initiating the cybersecurity training program and/or generating the user training profiles, cybersecurity training computing platform 110 may request the user-specific threat information generated by and/or maintained on targeted attack protection server 120.

At step 208, cybersecurity training computing platform 110 may receive the user-specific threat information. For example, at step 208, cybersecurity training computing platform 110 may receive, via the communication interface (e.g., communication interface 113), from a targeted attack protection (TAP) server (e.g., targeted attack protection server 120), user-specific threat information indicating at least one threat that has been encountered by at least one user. For instance, targeted attack protection server 120 may track enterprise users, what emails they are receiving, what threats are being presented in those emails, and what links and/or other items are being selected and/or otherwise interacted with by specific users, as illustrated above. And, at step 208, cybersecurity training computing platform 110 may receive any and/or all of this information from the TAP platform.

In some embodiments, receiving the user-specific threat information indicating the at least one threat that has been encountered by the at least one user may include receiving information stored by the TAP server based on the TAP server monitoring email traffic and identifying cybersecurity threats associated with the email traffic. For example, in receiving the user-specific threat information indicating the at least one threat that has been encountered by the at least one user at step 208, cybersecurity training computing platform 110 may receive information stored by the TAP server (e.g., targeted attack protection server 120) based on the TAP server (e.g., targeted attack protection server 120) monitoring email traffic and identifying cybersecurity threats associated with the email traffic, as illustrated above.

In some embodiments, receiving the user-specific threat information indicating the at least one threat that has been encountered by the at least one user may include receiving information indicating that a first enterprise user has encountered a first message-based threat and a second enterprise user has encountered a second message-based threat. For example, in receiving the user-specific threat information indicating the at least one threat that has been encountered by the at least one user at step 208, cybersecurity training computing platform 110 may receive information indicating that a first enterprise user has encountered a first message-based threat and a second enterprise user has encountered a second message-based threat. For instance, the first user may have encountered a business email compromise in a message that they received, and the second user may have encountered a malware threat in a message that they received, and cybersecurity training computing platform 110 may receive information identifying which message/threat was received by which user.

In some embodiments, receiving the user-specific threat information indicating the at least one threat that has been encountered by the at least one user may include receiving information indicating one or more user identifiers and one or more specific threats corresponding to the one or more user identifiers. For example, in receiving the user-specific threat information indicating the at least one threat that has been encountered by the at least one user at step 208, cybersecurity training computing platform 110 may receive information indicating one or more user identifiers and one or more specific threats corresponding to the one or more user identifiers. For example, cybersecurity training computing platform 110 may receive, from targeted attack protection server 120, email addresses of enterprise users who have been identified as 'top clickers' or 'very attacked persons' relative to other users in their enterprise organization and/or email addresses of users who have encountered specific types of cybersecurity threats.

In some embodiments, receiving the user-specific threat information indicating the at least one threat that has been encountered by the at least one user may include receiving threat family information associated with the at least one user and threat degree information associated with the at least one user. For example, in receiving the user-specific threat information indicating the at least one threat that has been encountered by the at least one user at step 208, cybersecurity training computing platform 110 may receive threat family information associated with the at least one user and threat degree information associated with the at least one user. For instance, cybersecurity training computing platform 110 may receive, from targeted attack protection server 120, information indicating, for each identified user, what specific threats and/or threat families that user is facing and/or relative degrees to which the user is encountering these threats. Targeted attack protection server 120 may, for example, provide information indicating that one user is a 'top clicker' who encounters a relatively large amount of malware, as well as information indicating that another user is a 'very attacked person' who encounters a relatively large amount of BEC threats and/or other, similar information concerning other users. Other threat families besides malware and BEC (which may, e.g., be identified in information received from cybersecurity training computing platform 110 from targeted attack protection server 120) may include phishing, spear-phishing, and families related to other types of threats.

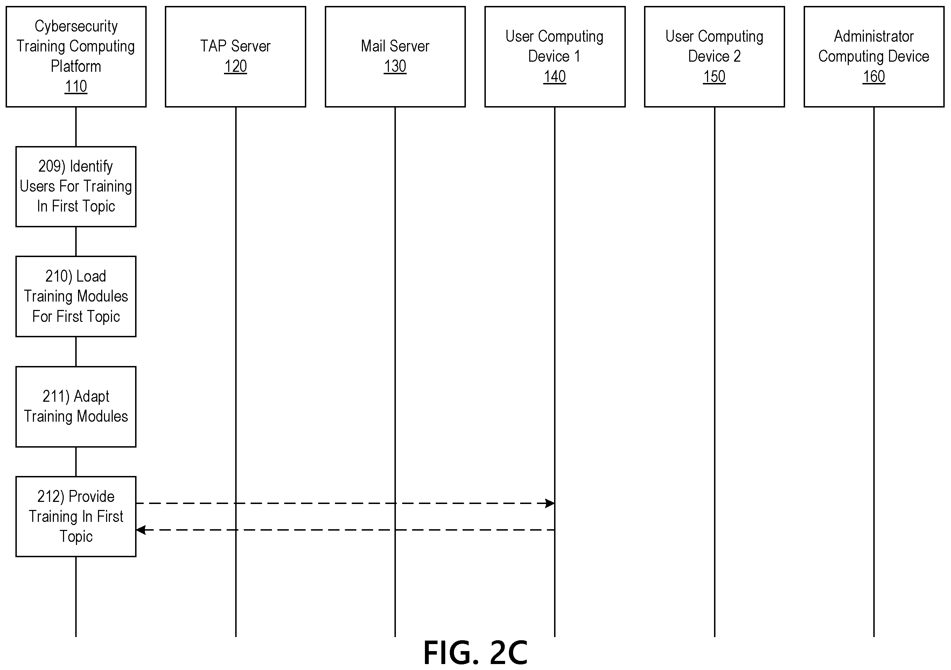

Referring to FIG. 2C, at step 209, cybersecurity training computing platform 110 may identify one or more users to be trained in a first topic (e.g., based on the information received from targeted attack protection server 120, the training profiles generated by cybersecurity training computing platform 110, and/or other information). For example, at step 209, cybersecurity training computing platform 110 may identify one or more users to receive cybersecurity training in a first cybersecurity training topic based on the user-specific threat information indicating the at least one threat that has been encountered by the at least one user. For instance, cybersecurity training computing platform 110 may select one or more specific users (e.g., as identified in the user-specific threat information received from cybersecurity training computing platform 110) to receive and/or complete one or more specific training modules. Cybersecurity training computing platform 110 may, for example, select specific training modules for each user based on the unique combination of threats that they actually encounter (e.g., based on the user-specific information received from targeted attack protection server 120). This approach may, for instance, contrast with alternative approaches in which users are trained on avoiding cybersecurity threats in general, without regard to the threats that they actually encounter. In this way, cybersecurity training computing platform 110 may customize cybersecurity training for each user to cover the specific threats and/or content that each user is actually seeing and/or interacting with on a daily basis in their messages.

In some embodiments, identifying the one or more users to receive the cybersecurity training in the first cybersecurity training topic based on the user-specific threat information indicating the at least one threat that has been encountered by the at least one user may include identifying a first user of the one or more users to receive the cybersecurity training in the first cybersecurity training topic based on the user-specific threat information indicating that the first user has encountered a specific threat corresponding to the first cybersecurity training topic. For example, in identifying the one or more users to receive the cybersecurity training in the first cybersecurity training topic based on the user-specific threat information indicating the at least one threat that has been encountered by the at least one user at step 209, cybersecurity training computing platform 110 may select and/or otherwise identify a first user of the one or more users to receive the cybersecurity training in the first cybersecurity training topic based on the user-specific threat information indicating that the first user has encountered a specific threat corresponding to the first cybersecurity training topic. For instance, cybersecurity training computing platform 110 may select and/or otherwise identify the first user to receive training on how to avoid falling for a business email compromise scam based on the user-specific threat information (e.g., received from targeted attack protection server 120) indicating that the first user received and/or interacted with a message containing a business email compromise threat (e.g., content requesting the user to perform one or more actions that could result in a business email compromise, such as approving and/or paying a fraudulent invoice or inappropriately sharing confidential information).

In some embodiments, identifying the one or more users to receive the cybersecurity training in the first cybersecurity training topic based on the user-specific threat information indicating the at least one threat that has been encountered by the at least one user may include identifying a second user of the one or more users to receive the cybersecurity training in the first cybersecurity training topic based on the user-specific threat information indicating that the second user is a top clicker. For example, in identifying the one or more users to receive the cybersecurity training in the first cybersecurity training topic based on the user-specific threat information indicating the at least one threat that has been encountered by the at least one user at step 209, cybersecurity training computing platform 110 may select and/or otherwise identify a second user of the one or more users to receive the cybersecurity training in the first cybersecurity training topic based on the user-specific threat information indicating that the second user is a top clicker. For instance, cybersecurity training computing platform 110 may select and/or otherwise identify the second user to receive training on how to avoid downloading, executing, and/or otherwise interacting with malware (e.g., malicious software) based on the user-specific threat information (e.g., received from targeted attack protection server 120) indicating that the second user is a top clicker of email links within their group and/or organization. This 'top clicker' status may be determined by targeted attack protection server 120 and received by cybersecurity training computing platform 110 based on targeted attack protection server 120 monitoring the second user's email traffic and interactions with links embedded in emails (e.g., targeted attack protection server 120 may rewrite links embedded in emails to point to targeted attack protection server 120 to enable link scanning/cybersecurity protection services, such as a URL Defense service) and comparing the second user's email traffic and interactions with the email traffic and interactions of other users in the second user's group and/or organization.

In some embodiments, identifying the one or more users to receive the cybersecurity training in the first cybersecurity training topic based on the user-specific threat information indicating the at least one threat that has been encountered by the at least one user may include identifying a third user of the one or more users to receive the cybersecurity training in the first cybersecurity training topic based on the user-specific threat information indicating that the third user is a very attacked person (VAP). For example, in identifying the one or more users to receive the cybersecurity training in the first cybersecurity training topic based on the user-specific threat information indicating the at least one threat that has been encountered by the at least one user at step 209, cybersecurity training computing platform 110 may select and/or otherwise identify a third user of the one or more users to receive the cybersecurity training in the first cybersecurity training topic based on the user-specific threat information indicating that the third user is a very attacked person (VAP). For instance, cybersecurity training computing platform 110 may select and/or otherwise identify the third user to receive training on how to avoid falling for a business email compromise scam based on the user-specific threat information (e.g., received from targeted attack protection server 120) indicating that the third user is a very attacked person within their group and/or organization. This 'very attacked person' status may be determined by targeted attack protection server 120 and received by cybersecurity training computing platform 110 based on targeted attack protection server 120 determining that the third user is a very attacked person because of their role within the organization, their access and/or authority within the organization, and/or other factors. For instance, targeted attack protection server 120 may identify a particular user as being a very attacked person because they are a senior executive with a high level of access within the organization or an accounts payable coordinator with the authority to approve vendor invoices on behalf of the organization.

At step 210, cybersecurity training computing platform 110 may load one or more training modules (e.g., based on the first topic). For example, at step 210, cybersecurity training computing platform 110 may load one or more cybersecurity training modules based on identifying the one or more users to receive the cybersecurity training in the first cybersecurity training topic. For instance, cybersecurity training computing platform 110 may select and/or retrieve such training modules from a library of training templates stored by cybersecurity training computing platform 110, and the selected modules may be linked to and/or otherwise concern the first cybersecurity training topic.

At step 211, cybersecurity training computing platform 110 may adapt the one or more training modules (e.g., based on the information received from targeted attack protection server 120, the training profiles generated by cybersecurity training computing platform 110, and/or other information). For example, at step 211, cybersecurity training computing platform 110 may dynamically adapt at least one training module of the one or more cybersecurity training modules based on the user-specific threat information. In dynamically adapting a training module, cybersecurity training computing platform 110 may, for instance, emphasize and/or highlight certain portions of the training module while deemphasizing and/or omitting other portions of the training module, so as to tailor the training module to a particular user's specific training needs. For instance, if a particular user is at risk for falling for a particular type of malware scam (e.g., as identified in the user-specific threat information received from targeted attack protection server 120), cybersecurity training computing platform 110 may dynamically adapt a malware training module to emphasize portions of the module that deal with the particular type of malware scam while deemphasizing other portions of the module that deal with other types of malware scams.

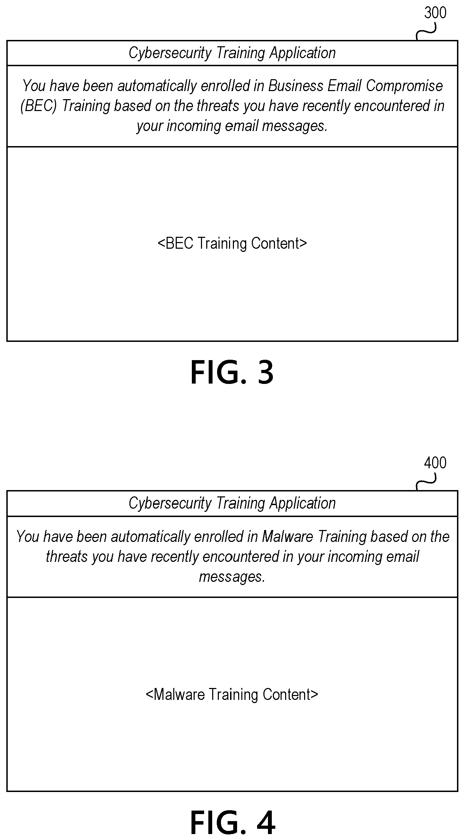

At step 212, cybersecurity training computing platform 110 may provide training in the first topic (e.g., to user computing device 140). For example, at step 212, cybersecurity training computing platform 110 may provide the one or more cybersecurity training modules to one or more user computing devices (e.g., user computing device 140). For instance, cybersecurity training computing platform 110 may host the one or more cybersecurity training modules and may provide the one or more identified users with access to the training modules. In some instances, in providing the one or more cybersecurity training modules to one or more user computing devices, cybersecurity training computing platform 110 may cause a user device (e.g., user computing device 140) to display and/or otherwise present a graphical user interface similar to graphical user interface 300, which is depicted in FIG. 3. As seen in FIG. 3, graphical user interface 300 may include text and/or other content informing a user that they have been automatically enrolled in a specific type of cybersecurity training based on the threats that they have encountered (e.g., "You have been automatically enrolled in Business Email Compromise (BEC) Training based on the threats you have recently encountered in your incoming email messages."), which may be determined by cybersecurity training computing platform 110 based on the threat information received from targeted attack protection server 120, as discussed above.

In some embodiments, providing the one or more cybersecurity training modules to the one or more user computing devices may include: generating one or more training user interfaces based on information associated with the one or more cybersecurity training modules; and sending, via the communication interface, to a user computing device, the one or more training user interfaces generated based on the information associated with the one or more cybersecurity training modules, where sending the one or more training user interfaces generated based on the information associated with the one or more cybersecurity training modules may cause the user computing device to display the one or more training user interfaces generated based on the information associated with the one or more cybersecurity training modules. For example, in providing the one or more cybersecurity training modules to the one or more user computing devices (e.g., user computing device 140) at step 212, cybersecurity training computing platform 110 may generate one or more training user interfaces based on information associated with the one or more cybersecurity training modules (which may, e.g., be selected, adapted, and/or otherwise loaded from a library maintained by cybersecurity training computing platform 110). In addition, cybersecurity training computing platform 110 may send, via the communication interface (e.g., communication interface 113), to a user computing device (e.g., user computing device 140), the one or more training user interfaces generated based on the information associated with the one or more cybersecurity training modules. In addition, by sending the one or more training user interfaces generated based on the information associated with the one or more cybersecurity training modules to user computing device 140, cybersecurity training computing platform 110 may cause user computing device 140 to display the one or more training user interfaces generated based on the information associated with the one or more cybersecurity training modules. For instance, cybersecurity training computing platform 110 may cause user computing device 140 to display a graphical user interface similar to graphical user interface 300, as discussed above.

In some embodiments, providing the one or more cybersecurity training modules to the one or more user computing devices may include automatically enrolling a specific user in a specific training module. For example, in providing the one or more cybersecurity training modules to the one or more user computing devices (e.g., user computing device 140) at step 212, cybersecurity training computing platform 110 may automatically enroll a specific user in a specific training module. For instance, after identifying that a specific user should receive one or more specific training modules based on the specific threats that they actually encounter (e.g., based on the threat information received from targeted attack protection server 120), cybersecurity training computing platform 110 may automatically enroll the user in the specific training modules. This automatic enrollment may, for instance, include cybersecurity training computing platform 110 sending the user an email invitation and/or other prompt to review and complete the training modules, as well as generating and/or sending one or more user interfaces associated with the training modules (e.g., once the user initiates the training and works to complete the modules).

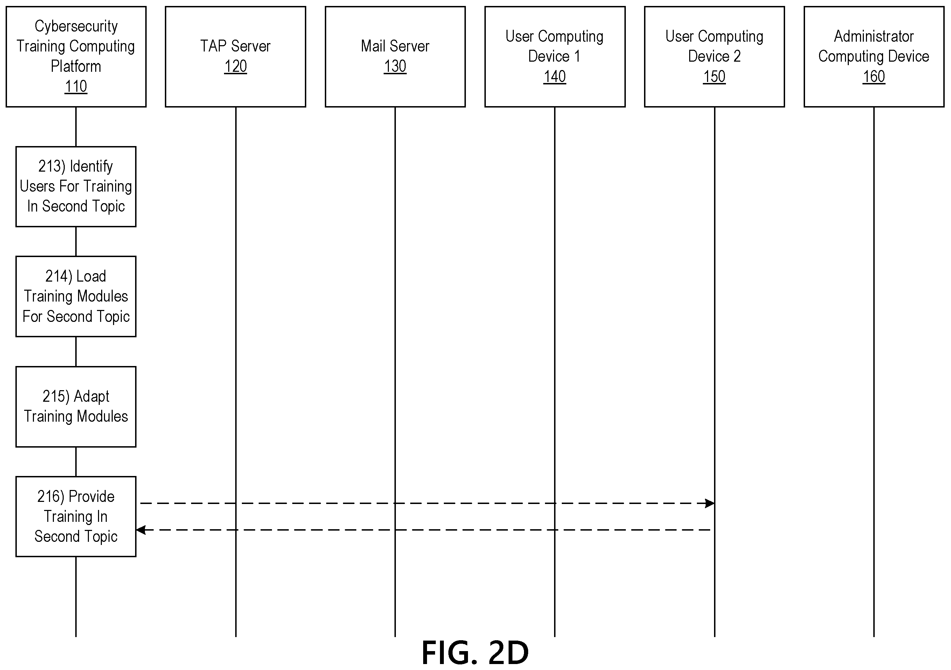

Referring to FIG. 2D, at step 213, cybersecurity training computing platform 110 may identify one or more users to be trained in a second topic (e.g., based on the information received from targeted attack protection server 120, the training profiles generated by cybersecurity training computing platform 110, and/or other information). For example, at step 213, cybersecurity training computing platform 110 may identify one or more additional users to receive cybersecurity training in a second cybersecurity training topic based on the user-specific threat information, where the second cybersecurity training topic is different from the first cybersecurity training topic. For instance, at step 209, cybersecurity training computing platform 110 may have selected a first set of user(s) to receive and/or complete one or more specific training modules concerning a first topic, such as how to identify and avoid phishing email threats, and at step 213, cybersecurity training computing platform 110 may select a second set of user(s) to receive and/or complete one or more specific training modules concerning a second, different topic, such as how to identify and avoid business email compromise (BEC) email threats. Like at step 209, cybersecurity training computing platform 110 may, for example, select specific training modules (e.g., in the second topic) for each user based on the unique combination of threats that they actually encounter (e.g., based on the user-specific information received from targeted attack protection server 120).

At step 214, cybersecurity training computing platform 110 may load one or more training modules (e.g., based on the second topic). For example, at step 214, cybersecurity training computing platform 110 may load one or more additional cybersecurity training modules based on identifying the one or more additional users to receive the cybersecurity training in the second cybersecurity training topic. For instance, cybersecurity training computing platform 110 may select and/or retrieve such training modules from a library of training templates stored by cybersecurity training computing platform 110, and the selected modules may be linked to and/or otherwise concern the second cybersecurity training topic.

At step 215, cybersecurity training computing platform 110 may adapt the one or more additional training modules (e.g., based on the information received from targeted attack protection server 120, the training profiles generated by cybersecurity training computing platform 110, and/or other information). For example, at step 215, cybersecurity training computing platform 110 may dynamically adapt at least one training module of the one or more additional cybersecurity training modules based on the user-specific threat information. In dynamically adapting a training module, cybersecurity training computing platform 110 may, for instance, emphasize and/or highlight certain portions of the training module while deemphasizing and/or omitting other portions of the training module, so as to tailor the training module to a particular user's specific training needs, as in the examples discussed above.

At step 216, cybersecurity training computing platform 110 may provide training in the second topic (e.g., to user computing device 150). For example, at step 216, cybersecurity training computing platform 110 may provide the one or more additional cybersecurity training modules to one or more additional user computing devices (e.g., user computing device 150). For instance, in providing the one or more additional cybersecurity training modules to one or more additional user computing devices, cybersecurity training computing platform 110 may cause a user device (e.g., user computing device 150) to display and/or otherwise present a graphical user interface similar to graphical user interface 400, which is depicted in FIG. 4. As seen in FIG. 4, graphical user interface 400 may include text and/or other content informing a user that they have been automatically enrolled in a specific type of cybersecurity training based on the threats that they have encountered (e.g., "You have been automatically enrolled in Malware Training based on the threats you have recently encountered in your incoming email messages."), which may be determined by cybersecurity training computing platform 110 based on the threat information received from targeted attack protection server 120, as discussed above.

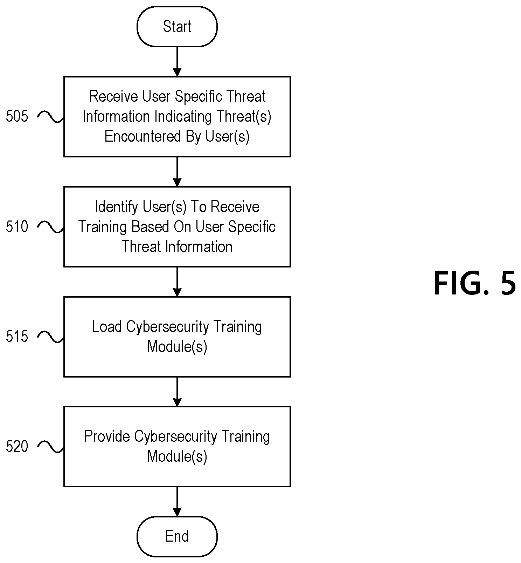

FIG. 5 depicts an illustrative method for dynamically providing cybersecurity training based on user-specific threat information in accordance with one or more example embodiments. Referring to FIG. 5, at step 505, a computing platform having at least one processor, a communication interface, and memory may receive, via the communication interface, from a targeted attack protection (TAP) server, user-specific threat information indicating at least one threat that has been encountered by at least one user. At step 510, the computing platform may identify one or more users to receive cybersecurity training in a first cybersecurity training topic based on the user-specific threat information indicating the at least one threat that has been encountered by the at least one user. At step 515, the computing platform may load one or more cybersecurity training modules based on identifying the one or more users to receive the cybersecurity training in the first cybersecurity training topic. At step 520, the computing platform may provide the one or more cybersecurity training modules to one or more user computing devices.

One or more aspects of the disclosure may be embodied in computer-usable data or computer-executable instructions, such as in one or more program modules, executed by one or more computers or other devices to perform the operations described herein. Program modules may include routines, programs, objects, components, data structures, and the like that perform particular tasks or implement particular abstract data types when executed by one or more processors in a computer or other data processing device. The computer-executable instructions may be stored as computer-readable instructions on a computer-readable medium such as a hard disk, optical disk, removable storage media, solid-state memory, RAM, and the like. The functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

One or more aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). The one or more computer-readable media may be and/or include one or more non-transitory computer-readable media.

As described herein, the various methods and acts may be operative across one or more computing servers and one or more networks. The functionality may be distributed in any manner, or may be located in a single computing device (e.g., a server, a client computer, and the like). For example, in alternative embodiments, one or more of the computing platforms discussed above may be combined into a single computing platform, and the various functions of each computing platform may be performed by the single computing platform. In such arrangements, any and/or all of the above-discussed communications between computing platforms may correspond to data being accessed, moved, modified, updated, and/or otherwise used by the single computing platform. Additionally or alternatively, one or more of the computing platforms discussed above may be implemented in one or more virtual machines that are provided by one or more physical computing devices. In such arrangements, the various functions of each computing platform may be performed by the one or more virtual machines, and any and/or all of the above-discussed communications between computing platforms may correspond to data being accessed, moved, modified, updated, and/or otherwise used by the one or more virtual machines.

Aspects of the disclosure have been described in terms of illustrative embodiments thereof. Numerous other embodiments, modifications, and variations within the scope of the appended claims will occur to persons of ordinary skill in the art from a review of this disclosure. For example, one or more of the steps depicted in the illustrative figures may be performed in other than the recited order, and one or more depicted steps may be optional in accordance with aspects of the disclosure.

## Claims

1. A computer-implemented method, the method being performed by a cybersecurity training computing platform (110) and comprising the steps of:
receiving (208, 505), via a communication interface (113), from a targeted attack protection, TAP, server (120), user-specific threat information indicating at least one threat that has been encountered by at least one user, wherein receiving (208, 505) the user-specific threat information indicating the at least one threat that has been encountered by the at least one user comprises receiving information stored by the TAP server (120) based on the TAP server (120) monitoring (202) email traffic and identifying (203) cybersecurity threats present in the email traffic of the at least one user;
identifying (209, 510) one or more users to receive cybersecurity training in a first cybersecurity training topic based on the user-specific threat information indicating the at least one threat that has been encountered by the at least one user;
loading (210, 515) one or more cybersecurity training modules based on identifying (209, 510) the one or more users to receive the cybersecurity training in the first cybersecurity training topic; and
providing (212, 520) the one or more cybersecurity training modules to one or more user computing devices (140, 150) of the one or more identified users;
wherein providing (212, 520) the one or more cybersecurity training modules to the one or more user computing devices (140, 150) comprises automatically enrolling a specific user in a specific training module and sending the specific user an email invitation and/or other prompt to review and complete the specific training module.

2. The method of claim 1, wherein receiving (208, 505) the user-specific threat information indicating the at least one threat that has been encountered by the at least one user comprises receiving information indicating that a first enterprise user has encountered a first message-based threat and a second enterprise user has encountered a second message-based threat.

3. The method of claim 1 or 2, wherein receiving (208, 505) the user-specific threat information indicating the at least one threat that has been encountered by the at least one user comprises receiving information indicating one or more user identifiers and one or more specific threats corresponding to the one or more user identifiers.

4. The method of any of the preceding claims, wherein receiving (208, 505) the user-specific threat information indicating the at least one threat that has been encountered by the at least one user comprises receiving threat family information associated with the at least one user and threat degree information associated with the at least one user.

5. The method of any of the preceding claims, wherein identifying (209, 510) the one or more users to receive the cybersecurity training in the first cybersecurity training topic based on the user-specific threat information indicating the at least one threat that has been encountered by the at least one user comprises identifying a first user of the one or more users to receive the cybersecurity training in the first cybersecurity training topic based on the user-specific threat information indicating that the first user has encountered a specific threat corresponding to the first cybersecurity training topic.

6. The method of any of the preceding claims, wherein identifying (209, 510) the one or more users to receive the cybersecurity training in the first cybersecurity training topic based on the user-specific threat information indicating the at least one threat that has been encountered by the at least one user comprises identifying a second user of the one or more users to receive the cybersecurity training in the first cybersecurity training topic based on the user-specific threat information indicating that the second user is a top clicker and/or a very attacked person, VAP.

7. The method of any of the preceding claims, wherein providing (212, 520) the one or more cybersecurity training modules to the one or more user computing devices (140, 150) comprises:
generating one or more training user interfaces (300, 400) based on information associated with the one or more cybersecurity training modules; and
sending, via the communication interface (113), to a user computing device (140, 150), the one or more training user interfaces (300, 400) generated based on the information associated with the one or more cybersecurity training modules,
wherein sending the one or more training user interfaces (300, 400) generated based on the information associated with the one or more cybersecurity training modules causes the user computing device (140, 150) to display the one or more training user interfaces (300, 400) generated based on the information associated with the one or more cybersecurity training modules.

8. The method of any of the preceding claims, further comprising:
prior to providing (212, 520) the one or more cybersecurity training modules to the one or more user computing devices (140, 150), dynamically adapting (211, 215) at least one training module of the one or more cybersecurity training modules based on the user-specific threat information.

9. The method of any of the preceding claims, further comprising:
identifying (213) one or more additional users to receive cybersecurity training in a second cybersecurity training topic based on the user-specific threat information, wherein the second cybersecurity training topic is different from the first cybersecurity training topic;
loading (214) one or more additional cybersecurity training modules based on identifying the one or more additional users to receive the cybersecurity training in the second cybersecurity training topic; and
providing (216) the one or more additional cybersecurity training modules to one or more additional user computing devices (140, 150).

10. The method of claim 9, further comprising:
prior to providing (216) the one or more additional cybersecurity training modules to the one or more additional user computing devices (140, 150), dynamically adapting (215) at least one training module of the one or more additional cybersecurity training modules based on the user-specific threat information.

11. A cybersecurity training computing platform comprising at least one processor (111) configured to perform the method of any of the preceding claims.

12. A computer-readable medium comprising instructions which, when executed by a cybersecurity training computing platform (110), cause the cybersecurity training computing platform (110) to carry out the method of any of claims 1-10.

13. A computer program product comprising instructions which, when the program is executed by a cybersecurity training computing platform (110), cause the cybersecurity training computing platform (110) to carry out the method of any of claims 1-10.

## Patentansprüche

1. Computer-implementiertes Verfahren, wobei das Verfahren von einer Computerplattform für Cybersicherheitstraining (110) ausgeführt wird und die folgenden Schritte aufweist:
Empfangen (208, 505) über eine Kommunikationsschnittstelle (113) von einem Targeted-Attack-Protection-Server, TAP-Server, (120) benutzerspezifischer Bedrohungsinformationen, die mindestens eine Bedrohung anzeigen, auf die mindestens ein Benutzer gestoßen ist, wobei das Empfangen (208, 505) der benutzerspezifischen Bedrohungsinformationen, die die mindestens eine Bedrohung anzeigen, auf die der mindestens eine Benutzer gestoßen ist, das Empfangen von Informationen aufweist, die von dem TAP-Server (120) auf Grundlage dessen gespeichert wurden, dass der TAP-Server (120) E-Mail-Verkehr überwacht (202) und in dem E-Mail-Verkehr des mindestens einen Benutzers vorhandene Cybersicherheitsbedrohungen identifiziert (203);
Identifizieren (209, 510) eines oder mehrerer Benutzer, die Cybersicherheitstraining zu einem ersten Cybersicherheitstrainingsthema erhalten sollen, basierend auf den benutzerspezifischen Bedrohungsinformationen, die die mindestens eine Bedrohung anzeigen, auf die der mindestens eine Benutzer gestoßen ist;
Laden (210, 515) eines oder mehrerer Cybersicherheitstrainingsmodule, basierend auf dem Identifizieren (209, 510) des einen oder der mehreren Benutzer, die das Cybersicherheitstraining zu dem ersten Cybersicherheitstrainingsthema erhalten sollen; und
Bereitstellen (212, 520) des einen oder der mehreren Cybersicherheitstrainingsmodule an ein oder mehrere Benutzer-Computergeräte (140, 150) des einen oder der mehreren identifizierten Benutzer;
wobei das Bereitstellen (212, 520) des einen oder der mehreren Cybersicherheitstrainingsmodule an das eine oder die mehreren Benutzer-Computergeräte (140, 150) das automatische Anmelden eines bestimmten Benutzers für ein bestimmtes Trainingsmodul und das Senden einer E-Mail-Einladung und/oder einer anderen Aufforderung an den bestimmten Benutzer, das bestimmte Trainingsmodul durchzugehen und abzuschließen, aufweist.

2. Verfahren nach Anspruch 1, wobei das Empfangen (208, 505) der benutzerspezifischen Bedrohungsinformationen, die die mindestens eine Bedrohung anzeigen, auf die der mindestens eine Benutzer gestoßen ist, das Empfangen von Informationen aufweist, die anzeigen, dass ein erster Unternehmensbenutzer auf eine erste nachrichtenbasierte Bedrohung gestoßen ist, und ein zweiter Unternehmensbenutzer auf eine zweite nachrichtenbasierte Bedrohung gestoßen ist.

3. Verfahren nach Anspruch 1 oder 2, wobei das Empfangen (208, 505) der benutzerspezifischen Bedrohungsinformationen, die die mindestens eine Bedrohung anzeigen, auf die der mindestens eine Benutzer gestoßen ist, das Empfangen von Informationen aufweist, die eine oder mehrere Benutzerkennungen und eine oder mehrere spezifische Bedrohungen anzeigen, die der einen oder den mehreren Benutzerkennungen entsprechen.

4. Verfahren nach einem der vorhergehenden Ansprüche, wobei das Empfangen (208, 505) der benutzerspezifischen Bedrohungsinformationen, die die mindestens eine Bedrohung anzeigen, auf die der mindestens eine Benutzer gestoßen ist, das Empfangen von Informationen über Bedrohungsfamilien aufweist, die dem mindestens einen Benutzer zugeordnet sind, sowie von Informationen über den Bedrohungsgrad, die dem mindestens einen Benutzer zugeordnet sind.

5. Verfahren nach einem der vorhergehenden Ansprüche, wobei das Identifizieren (209, 510) eines oder mehrerer Benutzer, die das Cybersicherheitstraining zu dem ersten Cybersicherheitstrainingsthema erhalten sollen, basierend auf den benutzerspezifischen Bedrohungsinformationen, die die mindestens eine Bedrohung anzeigen, auf die der mindestens eine Benutzer gestoßen ist, das Identifizieren eines ersten Benutzers aus dem einen oder den mehreren Benutzern aufweist, der das Cybersicherheitstraining zu dem ersten Cybersicherheitstrainingsthema erhalten soll, basierend auf den benutzerspezifischen Bedrohungsinformationen, die anzeigen, dass der erste Benutzer auf eine spezifische Bedrohung gestoßen ist, die dem ersten Cybersicherheitstrainingsthema entspricht.

6. Verfahren nach einem der vorhergehenden Ansprüche, wobei das Identifizieren (209, 510) des einen oder der mehreren Benutzer, die das Cybersicherheitstraining zu dem ersten Cybersicherheitstrainingsthema erhalten sollen, basierend auf den benutzerspezifischen Bedrohungsinformationen, die auf die mindestens eine Bedrohung hinweisen, auf die der mindestens eine Benutzer gestoßen ist, das Identifizieren eines zweiten Benutzers aus dem einen oder den mehreren Benutzern aufweist, der das Cybersicherheitstraining zu dem ersten Cybersicherheitstrainingsthema erhalten soll, basierend auf den benutzerspezifischen Bedrohungsinformationen, die anzeigen, dass der zweite Benutzer ein "Top Clicker" und/oder eine "Very Attacked Person", VAP, ist.

7. Verfahren nach einem der vorhergehenden Ansprüche, wobei das Bereitstellen (212, 520) des einen oder der mehreren Cybersicherheitstrainingsmodule an das eine oder die mehreren Benutzer-Computergeräte (140, 150) aufweist:
Erzeugen einer oder mehrerer Trainingsbenutzeroberflächen (300, 400), basierend auf Informationen, die dem einen oder den mehreren Cybersicherheitstrainingsmodulen zugeordnet sind; und
Senden der einen oder der mehreren Trainingsbenutzeroberflächen (300, 400), die, basierend auf den mit dem einen oder den mehreren Cybersicherheitstrainingsmodulen verbundenen Informationen, erzeugt wurden, über die Kommunikationsschnittstelle (113) an ein Benutzer-Computergerät (140, 150),
wobei das Senden der einen oder der mehreren Trainingsbenutzeroberflächen (300, 400), die, basierend auf den dem einen oder den mehreren Cybersicherheitstrainingsmodulen zugeordneten Informationen, erzeugt wurden, bewirkt, dass das Benutzer-Computergerät (140, 150) die eine oder die mehreren Trainingsbenutzeroberflächen (300, 400) anzeigt, die, basierend auf den dem einen oder den mehreren Cybersicherheitstrainingsmodulen zugeordneten Informationen, erzeugt wurden.

8. Verfahren nach einem der vorhergehenden Ansprüche, das ferner aufweist:
vor dem Bereitstellen (212, 520) des einen oder der mehreren Cybersicherheitstrainingsmodule an das eine oder die mehreren Benutzer-Computergeräte (140, 150), dynamisches Anpassen (211, 215) von mindestens einem Trainingsmodul aus dem einen oder den mehreren Cybersicherheitstrainingsmodulen, basierend auf den benutzerspezifischen Bedrohungsinformationen.

9. Verfahren nach einem der vorhergehenden Ansprüche, das ferner aufweist:
Identifizieren (213) eines oder mehrerer zusätzlicher Benutzer, die Cybersicherheitstraining zu einem zweiten Cybersicherheitstrainingsthema, basierend auf den benutzerspezifischen Bedrohungsinformationen, erhalten sollen, wobei sich das zweite Cybersicherheitstrainingsthema von dem ersten Cybersicherheitstrainingsthema unterscheidet;
Laden (214) eines oder mehrerer zusätzlicher Cybersicherheitstrainingsmodule, basierend auf dem Identifizieren des einen oder der mehreren zusätzlichen Benutzer, die das Cybersicherheitstraining zu dem zweiten Cybersicherheitstrainingsthema erhalten sollen; und
Bereitstellen (216) des einen oder der mehreren zusätzlichen Cybersicherheitstrainingsmodule an ein oder mehrere zusätzliche Benutzer-Computergeräte (140, 150).

10. Verfahren nach Anspruch 9, das ferner aufweist:
vor dem Bereitstellen (216) des einen oder der mehreren zusätzlichen Cybersicherheitstrainingsmodule an das eine oder die mehreren zusätzlichen Benutzer-Computergeräte (140, 150), dynamisches Anpassen (215) mindestens eines Trainingsmoduls aus dem einen oder den mehreren zusätzlichen Cybersicherheitstrainingsmodulen, basierend auf den benutzerspezifischen Bedrohungsinformationen.

11. Computerplattform für Cybersicherheitstraining, die mindestens einen Prozessor (111) aufweist, der so konfiguriert ist, dass er das Verfahren nach einem der vorhergehenden Ansprüche ausführt.

12. Computerlesbares Medium, das Anweisungen aufweist, die, wenn sie von einer Computerplattform für Cybersicherheitstraining (110) ausgeführt werden, bewirken, dass die Computerplattform für Cybersicherheitstraining (110) das Verfahren nach einem der Ansprüche 1-10 ausführt.

13. Computerprogrammprodukt, das Anweisungen aufweist, die, wenn das Programm von einer Computerplattform für Cybersicherheitstraining (110) ausgeführt wird, bewirken, dass die Computerplattform für Cybersicherheitstraining (110) das Verfahren nach einem der Ansprüche 1-10 ausführt.

## Revendications

1. Procédé mis en œuvre par ordinateur, le procédé étant réalisé par une plateforme informatique de formation sur la cybersécurité (110) et comprenant les étapes de :
la réception (208, 505), par l'intermédiaire d'une interface de communication (113), en provenance d'un serveur de protection contre les attaques ciblées, TAP (120), d'informations de menace spécifiques à un utilisateur indiquant au moins une menace qui a été rencontrée par au moins un utilisateur, dans lequel la réception (208, 505) des informations de menace spécifiques à un utilisateur indiquant l'au moins une menace qui a été rencontrée par l'au moins un utilisateur comprend la réception d'informations stockées par le serveur TAP (120) sur la base du fait que le serveur TAP (120) surveille (202) un trafic de courrier électronique et identifie (203) des menaces pour la cybersécurité présentes dans le trafic de courrier électronique de l'au moins un utilisateur ;
l'identification (209, 510) d'un ou de plusieurs utilisateurs devant recevoir une formation sur la cybersécurité dans un premier sujet de formation sur la cybersécurité sur la base des informations de menace spécifiques à un utilisateur indiquant l'au moins une menace qui a été rencontrée par l'au moins un utilisateur ;
le chargement (210, 515) d'un ou de plusieurs modules de formation sur la cybersécurité sur la base de l'identification (209, 510) des un ou plusieurs utilisateurs devant recevoir la formation sur la cybersécurité dans le premier sujet de formation sur la cybersécurité ; et
la fourniture (212, 520) des un ou plusieurs modules de formation sur la cybersécurité à un ou plusieurs dispositifs informatiques d'utilisateur (140, 150) des un ou plusieurs utilisateurs identifiés ;
dans lequel la fourniture (212, 520) des un ou plusieurs modules de formation sur la cybersécurité aux un ou plusieurs dispositifs informatiques d'utilisateur (140, 150) comprend l'inscription, de manière automatique, d'un utilisateur spécifique à un module de formation spécifique et l'envoi à l'utilisateur spécifique d'une invitation par courrier électronique et/ou d'une autre demande de réviser et de terminer le module de formation spécifique.

2. Procédé selon la revendication 1, dans lequel la réception (208, 505) des informations de menace spécifiques à un utilisateur indiquant l'au moins une menace qui a été rencontrée par l'au moins un utilisateur comprend la réception d'informations indiquant qu'un premier utilisateur d'entreprise a rencontré une première menace par message et qu'un deuxième utilisateur d'entreprise a rencontré une deuxième menace par message.

3. Procédé selon la revendication 1 ou 2, dans lequel la réception (208, 505) des informations de menace spécifiques à un utilisateur indiquant l'au moins une menace qui a été rencontrée par l'au moins un utilisateur comprend la réception d'informations indiquant un ou plusieurs identifiants d'utilisateur et une ou plusieurs menaces spécifiques correspondant aux un ou plusieurs identifiants d'utilisateur.

4. Procédé selon l'une quelconque des revendications précédentes, dans lequel la réception (208, 505) des informations de menace spécifiques à un utilisateur indiquant l'au moins une menace qui a été rencontrée par l'au moins un utilisateur comprend la réception d'informations de famille de menace associées à l'au moins un utilisateur et d'informations de degré de menace associées à l'au moins un utilisateur.

5. Procédé selon l'une quelconque des revendications précédentes, dans lequel l'identification (209, 510) des un ou plusieurs utilisateurs devant recevoir la formation sur la cybersécurité dans le premier sujet de formation sur la cybersécurité sur la base des informations de menace spécifiques à un utilisateur indiquant l'au moins une menace qui a été rencontrée par l'au moins un utilisateur comprend l'identification d'un premier utilisateur parmi les un ou plusieurs utilisateurs devant recevoir la formation sur la cybersécurité dans le premier sujet de formation sur la cybersécurité sur la base des informations de menace spécifiques à un utilisateur indiquant que le premier utilisateur a rencontré une menace spécifique correspondant au premier sujet de formation sur la cybersécurité.

6. Procédé selon l'une quelconque des revendications précédentes, dans lequel l'identification (209, 510) des un ou plusieurs utilisateurs devant recevoir la formation sur la cybersécurité dans le premier sujet de formation sur la cybersécurité sur la base des informations de menace spécifiques à un utilisateur indiquant l'au moins une menace qui a été rencontrée par l'au moins un utilisateur comprend l'identification d'un deuxième utilisateur parmi les un ou plusieurs utilisateurs devant recevoir la formation sur la cybersécurité dans le premier sujet de formation sur la cybersécurité sur la base des informations de menace spécifiques à un utilisateur indiquant que le deuxième utilisateur est un utilisateur à fort taux de clic et/ou une personne très attaquée, VAP.

7. Procédé selon l'une quelconque des revendications précédentes, dans lequel la fourniture (212, 520) des un ou plusieurs modules de formation sur la cybersécurité aux un ou plusieurs dispositifs informatiques d'utilisateur (140, 150) comprend :
la génération d'une ou de plusieurs interfaces utilisateur de formation (300, 400) sur la base d'informations associées aux un ou plusieurs modules de formation sur la cybersécurité ; et
l'envoi, par l'intermédiaire de l'interface de communication (113), à un dispositif informatique d'utilisateur (140, 150), des une ou plusieurs interfaces utilisateur de formation (300, 400) générées sur la base des informations associées aux un ou plusieurs modules de formation sur la cybersécurité,
dans lequel l'envoi des une ou plusieurs interfaces utilisateur de formation (300, 400) générées sur la base des informations associées aux un ou plusieurs modules de formation sur la cybersécurité amène le dispositif informatique d'utilisateur (140, 150) à afficher les une ou plusieurs interfaces utilisateur de formation (300, 400) générées sur la base des informations associées aux un ou plusieurs modules de formation sur la cybersécurité.

8. Procédé selon l'une quelconque des revendications précédentes, comprenant en outre :
avant la fourniture (212, 520) des un ou plusieurs modules de formation sur la cybersécurité aux un ou plusieurs dispositifs informatiques d'utilisateur (140, 150), l'adaptation, de manière dynamique (211, 215), d'au moins un module de formation parmi les un ou plusieurs modules de formation sur la cybersécurité sur la base des informations de menace spécifiques à un utilisateur.

9. Procédé selon l'une quelconque des revendications précédentes, comprenant en outre :
l'identification (213) d'un ou de plusieurs utilisateurs supplémentaires devant recevoir une formation sur la cybersécurité dans un deuxième sujet de formation sur la cybersécurité sur la base des informations de menace spécifiques à un utilisateur, dans lequel le deuxième sujet de formation sur la cybersécurité est différent du premier sujet de formation sur la cybersécurité ;
le chargement (214) d'un ou de plusieurs modules de formation sur la cybersécurité supplémentaires sur la base de l'identification des un ou plusieurs utilisateurs supplémentaires devant recevoir la formation sur la cybersécurité dans le deuxième sujet de formation sur la cybersécurité ; et
la fourniture (216) des un ou plusieurs modules de formation sur la cybersécurité supplémentaires à un ou plusieurs dispositifs informatiques d'utilisateur (140, 150) supplémentaires.

10. Procédé selon la revendication 9, comprenant en outre :
avant la fourniture (216) des un ou plusieurs modules de formation sur la cybersécurité supplémentaires aux un ou plusieurs dispositifs informatiques d'utilisateur (140, 150) supplémentaires, l'adaptation, de manière dynamique (215), d'au moins un module de formation parmi les un ou plusieurs modules de formation sur la cybersécurité supplémentaires sur la base des informations de menace spécifiques à un utilisateur.

11. Plateforme informatique de formation sur la cybersécurité comprenant au moins un processeur (111) configuré pour réaliser le procédé selon l'une quelconque des revendications précédentes.

12. Support lisible par ordinateur comprenant des instructions qui, lorsqu'elles sont exécutées par une plateforme informatique de formation sur la cybersécurité (110), amènent la plateforme informatique de formation sur la cybersécurité (110) à effectuer le procédé selon l'une quelconque des revendications 1 à 10.

13. Produit de programme informatique comprenant des instructions qui, lorsque le programme est exécuté par une plateforme informatique de formation sur la cybersécurité (110), amènent la plateforme informatique de formation sur la cybersécurité (110) à effectuer le procédé selon l'une quelconque des revendications 1 à 10.
